# EUROPEAN PATENT APPLICATION

(11) **EP 4 722 088 A1**
(43) Date of publication of application: **08.04.2026**
(21) Application number: 25204719.6
(22) Date of filing: 25.09.2025
(51) Int. Cl.: B62J 27/00, B60T 8/17, B60W 30/17, F16H 61/00

(54) **SINGLE TRACK VEHICLE WITH ADAPTATIVE CRUISE CONTROL AND AUTOMATIC DOWNSHIFTING**

(30) Priority: 03.10.2024 JP 2024174328
(71) Applicant: Yamaha Hatsudoki Kabushiki Kaisha, Iwata-shi, Shizuoka 438-8501 (JP)
(72) Inventor: OHATA, Shinobu, Iwata shi, Shizuoka, 4388501 (JP)
(74) Representative: Stöckeler, Ferdinand

(57) **Abstract**

A leaning vehicle capable of offering increased suppression of an influence that an operation of a brake device gives to a riding posture of a rider who is holding a handlebar in a leaning state is provided. The leaning vehicle includes a vehicle body, a rear wheel, a front fork, a front wheel, a handlebar, a power source, an automatic transmission, a front brake device, a rear brake device, a brake drive device, and a vehicle following control device. The vehicle following control device, after starting a decelerating control on a leaning vehicle, makes the automatic transmission perform a shift-down operation so as to reduce the amount of descent of the handlebar caused by the operation of the front brake device. The automatic transmission is a device for changing the speed ratio of rotation of the rear wheel. Given that the rotation speed of an output shaft of the power source is unchanged, the shift-down operation by the automatic transmission reduces the rotation speed of the rear wheel, and increases the torque of the power source as viewed from the rear wheel. Accordingly, due to the shift-down operation, a braking force of the rear wheel exerted by a resistance of the power source increases.

## Description

### Technical Field

The present teaching relates to a leaning vehicle.

### Background Art

For example, Patent Literature 1 (PTL 1) shows a leaning vehicle including a brake device. In this brake device, if it is determined that there is a possibility of an obstacle present ahead, an automatic brake control unit applies a pressure to a rear brake to brake the rear wheel, and at the same time applies a pressure to a front brake up to a predetermined pressure. In response to an antilock operation performed so as to avoid locking the rear wheel, the automatic brake control unit applies a pressure to the front brake, which is under the predetermined pressure, to brake the front wheel.

### Citation List

### Patent Literature

PTL 1: Japanese Patent No. 6842568

### Summary of Invention

### Technical Problem

The present teaching aims to provide increased suppression of an influence that an operation of a brake device gives to a riding posture of a rider who is holding a handlebar in a leaning state, in a vehicle following control on a leaning vehicle.

### Solution to Problem

The inventor of the present teaching conducted studies about an influence that an operation of a brake device gives to a riding posture of a rider in a vehicle following control on a leaning vehicle.

The rider of the leaning vehicle keeps his/her riding posture by sitting astride on a seat of the leaning vehicle and holding a handlebar. Thus, the position of the handlebar influences the riding posture of the rider. The handlebar functions as a steering input member, which is held by the rider and to which the rider inputs a steering force.

The handlebar of the leaning vehicle is fixed to a front fork, which is rotatably supported by a vehicle body of the leaning vehicle. The front fork supports a front wheel. The front fork is attached so as to have a caster angle relative to the vertical direction while the vehicle body stands upright. That is, the rotation axis of the front wheel is disposed farther forward in a forward-rearward direction of the vehicle body than the position at which the front fork is supported by the vehicle body. The front fork is provided with a shock absorber, which expands and contracts in the rotation axis direction of the front fork, that is, in the direction of extension of the front fork. The front fork is attached to the vehicle body with the caster angle. Therefore, in steering the leaning vehicle, which is configured to lean in the vehicle left direction when turning left and lean in the vehicle right direction when turning right, an accidental fluctuation is suppressed and an autonomous steering force is generated in accordance with the turning.

As a front brake operates in the leaning vehicle, the shock absorber of the front fork, which has the caster angle, contracts in accordance with a resistance force of the front wheel to a ground. Since the shock absorber contracts in the direction of extension of the front fork, the handlebar fixed to the front fork moves relative to the front wheel so as to get close to the front wheel as the shock absorber contracts. This makes the handlebar descend down. The descent of the handlebar, which the rider is holding with his/her hands, changes the riding posture of the rider who is holding the handlebar in a leaning state, and also changes the position at which the rider inputs a steering force to the handlebar, for example.

The inventor of the present teaching conducted further studies about the descent of the handlebar. Consequently, the inventor of the present teaching discovered that use of a resistance of a drive source to a rear wheel as a driving wheel of the leaning vehicle, that is, what is called an engine brake, may be effective. An effect of the engine brake is braking to the rear wheel with use of a mechanical resistance of the drive source (cf. https://www.goo-net.com/magazine/carmaintenance/parts/213384/). The engine brake is often used to assist a brake device that uses a frictional force. The inventor of the present teaching conceived of, in a leaning vehicle including an automatic transmission, starting a decelerating control and then making the automatic transmission perform a shift-down operation so as to reduce the amount of descent of the handlebar, the descent being caused by an operation of a front brake device. Due to the shift-down operation of the automatic transmission, a braking force of a rear wheel exerted by a resistance of a power source increases.

As the braking force of the rear wheel is increased by the resistance of the power source, a braking force of the front wheel can be reduced accordingly. The increase in the braking force of the rear wheel with the decrease in the braking force of the front wheel results in suppression of the amount of descent of the handlebar. Consequently, an influence on the riding posture of the rider who is holding the handlebar in a leaning state is suppressed. Based on the knowledge described so far, the present teaching was achieved.

To attain the aim described above, an aspect of the present teaching provides a leaning vehicle having the following configuration.
(1) A leaning vehicle configured to lean in vehicle left direction when turning left and lean in vehicle right direction when turning right, the leaning vehicle including:
   a vehicle body;
   a rear wheel as a driving wheel supported by the vehicle body;
   a front fork rotatably supported by the vehicle body so as to have a caster angle relative to up-down direction of the vehicle body, the front fork being provided with a shock absorber, the shock absorber being configured to expand and contract in its rotation axis direction;
   a front wheel supported by the front fork;
   a handlebar fixed to the front fork, the handlebar being configured to be held by a rider of the leaning vehicle;
   a power source having an output shaft, the power source being configured to output power for making the leaning vehicle travel in the form of rotation of the output shaft;
   an automatic transmission for, through a shift-up operation or a shift-down operation, changing the speed ratio between rotation outputted from the output shaft and rotation of the rear wheel;
   a front brake device for braking the front wheel;
   a rear brake device for braking the rear wheel;
   a brake drive device for operating the front brake device and the rear brake device; and
   a vehicle following control device for controlling the power source, the brake drive device, and the automatic transmission, to control accelerating or decelerating of the leaning vehicle such that the leaning vehicle follows a preceding vehicle of the leaning vehicle,
   the vehicle following control device being configured to, after starting a decelerating control on the leaning vehicle, make the automatic transmission perform a shift-down operation so as to reduce the amount of descent of the handlebar caused by the operation of the front brake device.

The leaning vehicle of (1) includes the vehicle body, the rear wheel, the front fork, the front wheel, the handlebar, the power source, the automatic transmission, the front brake device, the rear brake device, the brake drive device, and the vehicle following control device. The rear wheel is the driving wheel, and is supported by the vehicle body. The front fork is rotatably supported by the vehicle body. The front fork is supported by the vehicle body so as to have a caster angle relative to the up-down direction of the vehicle body. The up-down direction is a direction perpendicular to the ground in a standing-upright state of the vehicle body. The front fork is provided with the shock absorber. The shock absorber expands and contracts in the rotation axis direction of the front fork. The handlebar is fixed to the front fork, and is held by a hand of the rider. The power source has the output shaft. The power source outputs power for making the leaning vehicle travel. The power source outputs the power in the form of rotation of the output shaft. The automatic transmission uses the power to perform a shift-up operation or a shift-down operation. Through the shift-up operation or the shift-down operation, the automatic transmission changes the speed ratio between rotation outputted from the output shaft and rotation of the rear wheel. The front brake device is a device for braking the front wheel. The rear brake device is a device for braking the rear wheel. The brake drive device operates the front brake device and the rear brake device. The vehicle following control device controls the power source, the brake drive device, and the automatic transmission. This is how the vehicle following control device controls the traveling speed of the leaning vehicle such that the leaning vehicle follows the preceding vehicle.

The vehicle following control device starts the decelerating control on the leaning vehicle, and then makes the automatic transmission perform a shift-down operation so as to reduce the amount of descent of the handlebar caused by the operation of the front brake device. The automatic transmission is a device for changing the speed ratio of rotation of the rear wheel. As a result of the shift-down operation by the automatic transmission, the rotation speed of the power source increases. The increase in the rotation speed of the power source leads to an increase in a loss torque of the power source, which makes a resistance on the output shaft of the power source stronger. In addition, the shift-down operation results in an increase in the speed reduction ratio, so that a braking force exerted by the resistance of the power source on the rear wheel increases. Such a braking force on the rear wheel is, for example, an engine brake.

The amount of decelerating of the leaning vehicle corresponds to the sum of the braking force of the front wheel and the braking force of the rear wheel. Accordingly, the increase in the braking force of the rear wheel caused by the shift-down operation allows the braking force of the front wheel to decrease. In this manner, the vehicle following control device makes the automatic transmission perform the shift-down operation so as to reduce the amount of descent of the handlebar caused by the operation of the front brake device. Since the amount of descent of the handlebar is suppressed, an influence on the riding posture of the rider who is holding the handlebar in a leaning state is able to be suppressed.

In an aspect of the present teaching, the leaning vehicle may adopt the following configuration.

(2) In the leaning vehicle of (1),
the vehicle following control device starts a decelerating control on the leaning vehicle, and then, when the front brake device is in operation, makes the automatic transmission perform a shift-down operation so as to reduce the amount of descent of the handlebar caused by the operation of the front brake device.

According to (2), after the decelerating control is started, the automatic transmission performs the shift-down operation when the front brake device is in operation. Since the braking force of the rear wheel increases due to the shift-down operation when the front brake device is in operation, a reduction of the braking force of the front wheel is allowed. As a result of the braking force of the rear wheel increasing and the braking force of the front wheel decreasing when the front brake device is in operation, the amount of descent of the handlebar is suppressed, and thus an influence on the riding posture of the rider is suppressed.

In an aspect of the present teaching, the leaning vehicle may adopt the following configuration.

(3) In the leaning vehicle of (2),
the vehicle following control device makes the automatic transmission perform a shift-down operation so as to reduce the amount of descent of the handlebar caused by the operation of the front brake device, based on the amount of operation of the front brake device.

According to (3), along with the shift-down operation performed based on the amount of operation of the front brake device, the amount of operation of the front brake device decreases. Accordingly, as a result of the increase in the braking force of the rear wheel and the decrease in the braking force of the front wheel, the amount of descent of the handlebar is suppressed. Consequently, an influence on the riding posture of the rider is suppressed.

The amount of operation of the front brake device is, for example, the pressure of a brake caliper in a case where the front brake device has the brake caliper. The amount of operation of the front brake device is not particularly limited, and for example, the pressure of a working fluid that the brake drive device supplies to the front brake device may be adoptable. The pressure of the brake caliper or the pressure of the working fluid can be detected with a pressure sensor, for example.

In an aspect of the present teaching, the leaning vehicle may adopt the following configuration.

(4) In the leaning vehicle of (2) or (3),
the vehicle following control device acquires a target acceleration, to control accelerating or decelerating of the leaning vehicle based on the target acceleration, and to make the automatic transmission perform a shift-down operation so as to reduce the amount of descent of the handlebar caused by the operation of the front brake device based on the target acceleration.

According to (4), along with the shift-down operation performed based on the target acceleration, the amount of operation of the front brake device decreases. Accordingly, as a result of the increase in the braking force of the rear wheel and the decrease in the braking force of the front wheel, the amount of descent of the handlebar is suppressed. Consequently, an influence on the riding posture of the rider is suppressed.

The acceleration is, for example, a concept encompassing a positive value and a negative value, the positive value indicating accelerating forward of the leaning vehicle, the negative value indicating decelerating. How the value is indicated is not limited to this, however.

In an aspect of the present teaching, the leaning vehicle may adopt the following configuration.

(5) In the leaning vehicle of any one of (2) to (4),
the vehicle following control device detects an actual acceleration of the leaning vehicle, to control accelerating or decelerating of the leaning vehicle based on the actual acceleration, and to make the automatic transmission perform a shift-down operation so as to reduce the amount of descent of the handlebar caused by the operation of the front brake device based on the actual acceleration.

According to (5), along with the shift-down operation performed based on the actual acceleration of leaning vehicle, the amount of operation of the front brake device decreases. Accordingly, as a result of the increase in the braking force of the rear wheel and the decrease in the braking force of the front wheel, the amount of descent of the handlebar is suppressed. Consequently, an influence on the riding posture of the rider is suppressed.

In an aspect of the present teaching, the leaning vehicle may adopt the following configuration.

(6) In the leaning vehicle of any one of (2) to (5),
the vehicle following control device acquires a front brake control value, which is used to make the brake drive device operate the front brake device, to control accelerating or decelerating of the leaning vehicle based on the front brake control value, and to make the automatic transmission perform a shift-down operation so as to reduce the amount of descent of the handlebar caused by the operation of the front brake device based on the front brake control value.

According to (6), the shift-down operation is performed based on the front brake control value, and thus the shift-down operation is performed so as to reduce the amount of descent of the handlebar without detection of an actual operation state of the front brake. Accordingly, the amount of descent of the handlebar is able to be suppressed with a small number of component parts.

In an aspect of the present teaching, the leaning vehicle may adopt the following configuration.

(7) In the leaning vehicle of (1),
the vehicle following control device acquires a target acceleration as a control target in accelerating or decelerating the leaning vehicle, and, when the target acceleration is in an expected operating range where the operation of the front brake device is expected to take place, makes the automatic transmission perform a shift-down operation so as to reduce the amount of descent of the handlebar caused by the operation of the front brake device.

According to (7), the shift-down operation is performed when the front brake device is not in operation and the target acceleration is in the expected operating range where the operation of the front brake device is expected to take place. Since the shift-down operation is performed before the front brake device actually operates, a decrease in the amount of descent of the handlebar at a time of operating the front brake device is further suppressed. Consequently, an influence on the riding posture of the rider is suppressed.

In an aspect of the present teaching, the leaning vehicle may adopt the following configuration.

(8) In the leaning vehicle of (7),
the vehicle following control device starts a decelerating control on the leaning vehicle, and then, when the rear brake device is in operation, forces the automatic transmission to perform a shift-down operation so as to reduce the amount of descent of the handlebar caused by the operation of the front brake device.

At a time of decelerating caused by the vehicle following control device, the rear brake device often operates before the front brake device operates. According to (8), the shift-down operation is performed when the rear brake device is in operation, and therefore it is likely that the shift-down operation precedes the operation of the front brake device. Accordingly, the braking force of the front wheel at a time when the front brake operates further decreases. This results in suppression of the amount of descent of the handlebar. Consequently, an influence on the riding posture of the rider is suppressed.

In an aspect of the present teaching, the leaning vehicle may adopt the following configuration.

(9) In the leaning vehicle of (8),
the vehicle following control device starts a decelerating control on the leaning vehicle, and then based on the amount of operation of the rear brake device, makes the automatic transmission perform a shift-down operation so as to reduce the amount of descent of the handlebar caused by the operation of the front brake device.

According to (9), along with the shift-down operation performed based on the amount of operation of the rear brake device, the amount of operation of the front brake device decreases. Accordingly, as a result of the increase in the braking force of the rear wheel and the decrease in the braking force of the front wheel, the amount of descent of the handlebar is suppressed. Consequently, an influence on the riding posture of the rider is suppressed.

The amount of operation of the rear brake device is, for example, the pressure of a brake caliper in a case where the rear brake device has the brake caliper. The amount of operation of the rear brake device is, for example, the pressure of a working fluid that the brake drive device supplies to the rear brake device. The pressure of the brake caliper or the pressure of the working fluid can be detected with a pressure sensor, for example.

In an aspect of the present teaching, the leaning vehicle may adopt the following configuration.

(10) The leaning vehicle of (8) or (9) further includes
a brake lamp configured to be turned on when the brake drive device operates the front brake device or the rear brake device, and
when the brake lamp is on, the vehicle following control device makes the automatic transmission perform a shift-down operation so as to reduce the amount of descent of the handlebar caused by the operation of the front brake device.

According to (10), in the vehicle following control, if the front brake device or the rear brake device operates, the brake lamp is turned on. Since the shift-down operation is performed in accordance with the turn-on of the brake lamp, the amount of descent of the handlebar is suppressed with a smaller number of component parts as compared to a pressure detection. Consequently, an influence on the riding posture of the rider is suppressed with a small number of component parts.

In an aspect of the present teaching, the leaning vehicle may adopt the following configuration.

(11) In the leaning vehicle of any one of (8) to (9),
the vehicle following control device acquires a rear brake control value, which is used to make the brake drive device operate the rear brake device, to control accelerating or decelerating of the leaning vehicle based on the rear brake control value, and to make the automatic transmission perform a shift-down operation so as to reduce the amount of descent of the handlebar caused by the operation of the front brake device based on the rear brake control value.

According to (11), the shift-down operation is performed based on the rear brake control value, and thus the amount of operation of the front brake device is reduced by the shift-down operation without detection of an actual operation state of the rear brake. Accordingly, as a result of the increase in the braking force of the rear wheel and the decrease in the braking force of the front wheel, the amount of descent of the handlebar is suppressed. Consequently, an influence on the riding posture of the rider is suppressed.

Here, the rear brake control value is a target value of a rear brake caliper pressure, which is calculated by the vehicle following control device, or is a flag indicating that a pressure is being applied to the rear brake device, for example.

In an aspect of the present teaching, the leaning vehicle may adopt the following configuration.

(12) In the leaning vehicle of any one of (8) to (11),
the vehicle following control device acquires a following acceleration, which is used to follow the preceding vehicle, from the relationship with the preceding vehicle, and acquires a target acceleration, which is obtained by eliminating an abrupt change component from the following acceleration, to control accelerating or decelerating of the leaning vehicle based on the target acceleration, and to make the automatic transmission perform a shift-down operation so as to reduce the amount of descent of the handlebar caused by the operation of the front brake device based on the following acceleration.

According to (12), accelerating or decelerating of the leaning vehicle is controlled based on the target acceleration, which is obtained by eliminating the abrupt change component from the following acceleration. This suppresses an abrupt behavior. In addition, the shift-down operation for reducing the amount of descent of the handlebar is performed by using the following acceleration from which the abrupt change component is not yet eliminated. This allows the amount of descent of the handlebar to be suppressed earlier in response to the operation of the front brake device. Consequently, an influence on the riding posture of the rider is suppressed earlier.

The leaning vehicle is a vehicle configured to be capable of turning in a leaning posture in which the vehicle leans toward the center of a curve. The leaning vehicle is one type of a straddled vehicle, which is configured to have a rider ride thereon astride a seat. The leaning vehicle has a power source. The leaning vehicle encompasses motorcycles of scooter types, moped types, off-road types, and on-road types, for example. The leaning vehicle may include at least one front wheel and at least one rear wheel. The leaning vehicle is not limited to a motorcycle, and may be a motor tricycle whose front wheel or rear wheel is composed of a pair of left and right wheels, or a four-wheeled motor vehicle whose front wheel and rear wheel are each composed of a pair of left and right wheels.

The power source is an engine as an internal combustion engine, for example. The power source is not particularly limited, and may be an electric motor, for example.

The automatic transmission is, for example, a stepped transmission in which the gear ratio is switched by selection of combinations of gears. The automatic transmission changes a combination of gears by driving of an electric actuator or a hydraulic actuator, for example. The automatic transmission is not particularly limited, and may be a continuously variable transmission (CVT), for example.

The vehicle following control device, which is a device for controlling the traveling speed of the leaning vehicle such that the leaning vehicle follows the preceding vehicle of the leaning vehicle, is called an adaptive cruise control device, for example. A part of the vehicle following control device may be separate from another part thereof. For example, of the vehicle following control device, a part that makes a determination about following the preceding vehicle, a part that controls the power source, a part that controls the brake drive device, and a part that controls the automatic transmission may be at least partially separate from the rest part. For example, it may be acceptable that a unit that makes a determination about following the preceding vehicle and a unit that controls the automatic transmission are disposed in different places in the leaning vehicle, and are configured to communicate with each other to function as the vehicle following control device. A part that makes a determination about following the preceding vehicle and a part that controls the automatic transmission may be integrated into one unit.

The vehicle following control device is a device different from the power source control device, for example. The vehicle following control device is not particularly limited, and may be integrated with the power source control device, for example. The vehicle following control device may be a device different from both a control part for the brake drive device and a control part for the automatic transmission, for example. The vehicle following control device may be integrated with the control part for the brake drive device and the control part for the automatic transmission.

A timing when the shift-down operation is performed under control by the vehicle following control device may not always have to be simultaneous with a start of the operation of the front brake device, and for example, may be before a timing when the front brake device operates. This is because the increase in the braking force of the rear wheel caused by the shift-down operation is less influential to a descent of the handlebar. The timing when the shift-down operation is performed may be a timing immediately after the front brake device starts operating and before an influence of a descent of the handlebar fully manifests itself.

The terminology as used herein is for defining particular embodiments only and is not intended to limit the teaching. As stated herein, the term "and/or" includes any and all combinations of one or more of the associated listed items. As stated herein, the terms "including," "comprising," or "having," and variations thereof specify the presence of stated features, steps, operations, elements, components, and/or equivalents thereof, and can include one or more of steps, operations, elements, components, and/or their groups. As stated herein, the terms "attached," "connected," "engaged," and/or equivalents thereof are used in a broad sense, and include both, direct and indirect attachment, connection, and engagement. Furthermore, the wordings "connected" and "engaged" are not limited to physical or mechanical connection or engagement, but may include direct or indirect electrical connection or engagement. Unless otherwise defined, all terms (including technical and scientific terms) used herein have the same meaning as commonly understood by one of ordinary skill in the art to which the present teaching belongs. It will be further understood that terms, such as those defined in commonly used dictionaries, should be interpreted as having a meaning that is consistent with their meaning in the context of the present disclosure and relevant art and should not be interpreted in an idealized or overly formal sense unless expressly so defined herein. It will be understood that the description of the present teaching discloses multiple techniques and steps. Each of these has individual benefit and each can also be used in conjunction with one or more, or in some cases all, of the other disclosed techniques. Accordingly, for the sake of clarity, this description will refrain from repeating every possible combination of the individual steps in an unnecessary fashion. Nevertheless, the Description and Claims should be read with the understanding that such combinations are entirely within the scope of the present teaching as defined by the appended claims.

This Description is giving an explanation about a novel leaning vehicle. In the description given below, for the purposes of explanation, numerous specific details are set forth in order to provide a thorough understanding of the present teaching. It will be apparent, however, that those skilled in the art may practice the present teaching without these specific details. The present disclosure is to be considered as an exemplification of the present teaching, and is not intended to limit the present teaching to specific examples illustrated by drawings or descriptions below.

### Advantageous Effects of the Invention

The present teaching is able to provide increased suppression of an influence that an operation of a brake device gives to a riding posture of a rider in a vehicle following control on a leaning vehicle.

### Brief Description of Drawings

FIG. 1 shows a block diagram illustrating a schematic configuration of a leaning vehicle according to an embodiment of the present teaching;
FIG. 2 shows a flowchart illustrating operations of a vehicle following control device of the leaning vehicle shown in FIG. 1;
FIG. 3 shows a graph schematically showing operation conditions of devices in a first example;
FIG. 4 shows a time chart showing exemplary operations in an example;
FIG. 5 shows a graph showing characteristics of gear stages in a variation of a fourth example;
FIG. 6 shows a graph schematically showing operation conditions of devices in a sixth example;
FIG. 7 shows a time chart showing exemplary operations in a sixth example;
FIG. 8 shows a graph schematically showing operation conditions of devices in a tenth example; and
FIG. 9 shows a time chart showing exemplary operations in a tenth example.

### Description of Embodiments

### [First Embodiment]

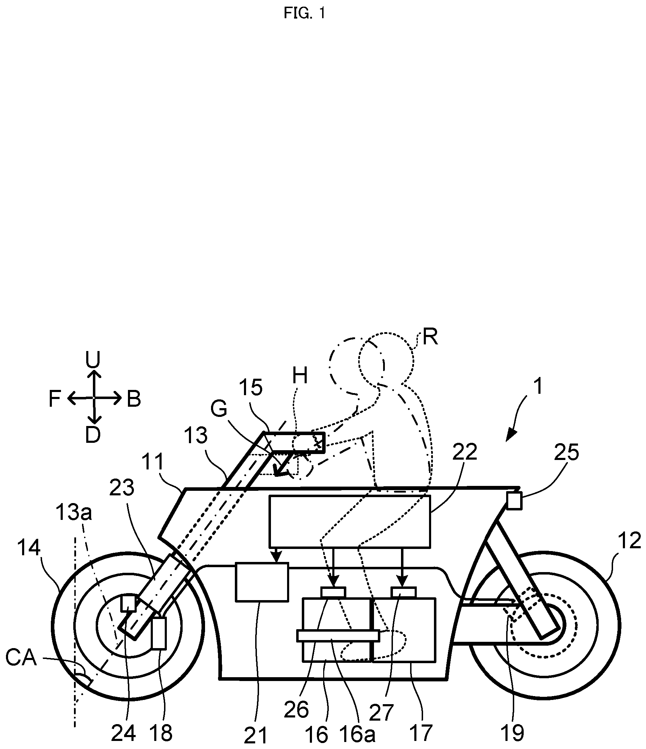

FIG. 1 is a block diagram illustrating a schematic configuration of a leaning vehicle according to an embodiment of the present teaching.

A leaning vehicle 1 shown in FIG. 1 is a vehicle that turns in a leaning posture in which the vehicle leans toward the center of a curve. To be specific, the leaning vehicle 1 leans in vehicle left direction when turning left, and leans in vehicle right direction when turning right. The leaning vehicle 1 includes a vehicle body 11, a rear wheel 12, a front fork 13, a front wheel 14, a handlebar 15, a power source 16, an automatic transmission 17, a front brake device 18, a rear brake device 19, a brake drive device 21, and a vehicle following control device 22.

In FIG. 1, the arrow F indicates forward direction of the leaning vehicle 1. The forward direction is a direction in which the leaning vehicle 1 travels. The arrow B indicates rearward direction. The arrow F and the arrow B represent forward-rearward direction FB of the leaning vehicle 1. The arrow U indicates upward direction. The arrow D indicates downward direction. The arrow U and the arrow D represent up-down direction UD of the leaning vehicle 1. The upward direction U, the downward direction D, and the up-down direction UD are parallel to the vertical direction of the leaning vehicle 1 in a standing-upright state.

The rear wheel 12 is supported by the vehicle body 11. The rear wheel 12 is a driving wheel. The front fork 13 is rotatably supported by the vehicle body 11. The front fork 13 is supported by the vehicle body 11 so as to have a caster angle CA relative to the up-down direction UD of the vehicle body 11. In more detail, the rotation axis 13a of the front fork 13 is in a direction having the caster angle CA relative to the up-down direction UD. The up-down direction UD is a direction perpendicular to the ground in the standing-upright state of the vehicle body 11. The front wheel 14 is supported by a lower end portion of the front fork 13. The front wheel 14 is rotatably supported by the front fork 13.

The handlebar 15 is fixed to an upper end portion of the front fork 13. The handlebar 15 is held by a hand H of a rider R who is riding on the leaning vehicle 1. A steering force is inputted to the handlebar 15 with the hand H of the rider R. The front fork 13 is provided with a shock absorber 23. The shock absorber 23 is disposed between the handlebar 15 and the front wheel 14. More specifically, the shock absorber 23 is disposed between a position in the front fork 13 at which the handlebar 15 is attached and a position in the front fork 13 at which the front wheel 14 is attached. The shock absorber 23, through elastic deformation, expands and contracts in the direction of the rotation axis 13a of the front fork 13, or the axial direction of the front fork 13.

The power source 16 is attached to the vehicle body 11. The power source 16 outputs power for making the leaning vehicle 1 travel. The power source 16 is an internal combustion engine, for example. The power source 16 is provided with a power source control device 26. The power source control device 26 controls operations of the power source 16. The power source control device 26 is an engine control unit for example, and controls an output of the power source 16 by controlling the amount of fuel supply and the degree of opening of a throttle valve disposed in the internal combustion engine as the power source 16, for example. The power source 16 has an output shaft 16a. The power source 16 outputs power in the form of rotation of the output shaft 16a. The output shaft 16a is a crankshaft, for example. The automatic transmission 17 changes the speed ratio between the rotation outputted from the output shaft 16a and the rotation of the rear wheel 12.

The automatic transmission 17 is provided with a gear shift actuator 27. The gear shift actuator 27 is an electric actuator or a hydraulic actuator, for example. Using the power of the gear shift actuator 27, the automatic transmission 17 performs a shift-up operation or a shift-down operation, to change the speed ratio. A clutch (not shown) is disposed between the power source 16 and the automatic transmission 17.

The front brake device 18 is a device for braking the front wheel 14. The rear brake device 19 is a device for braking the rear wheel 12. The brake drive device 21 operates the front brake device 18 and the rear brake device 19. The brake drive device 21 is capable of operating the front brake device 18 and the rear brake device 19 independently of each other. The brake drive device 21 includes a valve and an actuator, both of which are not shown, for controlling the pressure of a working fluid. Through the working fluid, the brake drive device 21 applies a pressure to each of the front brake device 18 and the rear brake device 19, to operate the front brake device 18 and the rear brake device 19. The brake drive device 21 also includes a sensor (not shown) for detecting the pressure of the working fluid.

The vehicle following control device 22 controls the power source 16, the brake drive device 21, and the automatic transmission 17. In more detail, the vehicle following control device 22 controls an operation of the power source 16 via the power source control device 26, and controls an operation of the automatic transmission 17 via the gear shift actuator 27. The vehicle following control device 22, for example, controls the power source 16, the brake drive device 21, and the automatic transmission 17 such that the leaning vehicle 1 travels with a target acceleration and at a target speed based on a distance to a preceding vehicle detected by a radar distance sensor (not shown). In this manner, the vehicle following control device 22 controls the traveling speed of the leaning vehicle 1 such that the leaning vehicle 1 follows the preceding vehicle. Here, means for acquiring a situation of the preceding vehicle is not limited to detection by the radar distance sensor. For example, an image recognition using an image photographed with a camera, or an analysis using communication with a device disposed in the preceding vehicle may be adoptable.

The vehicle following control device 22 is, more specifically, composed of a computer including a memory (not shown) and a central processing unit, the memory being configured to store a program and data, the central processing unit being configured to read out the program from the memory and execute the program.

To decelerate the leaning vehicle 1 in traveling, the vehicle following control device 22 controls at least any of the power source 16, the front brake device 18, the rear brake device 19, or the automatic transmission 17.

If, for example, the front brake device 18 operates to brake the front wheel 14 while the leaning vehicle 1 is traveling, a braking force in the forward-rearward direction FB is exerted between the front wheel 14 and the ground. The front fork 13, which is disposed between the front wheel 14 and the vehicle body 11, is attached so as to have the caster angle CA relative to the up-down direction UD. Accordingly, the shock absorber 23 of the front fork 13 contracts in accordance with the braking force in the forward-rearward direction FB. As the shock absorber 23 contracts, the handlebar 15, which is fixed to the upper end portion of the front fork 13, moves in the fork direction G shown in FIG. 1 relative to the front wheel 14 so as to get close to the front wheel 14. Consequently, the height of the handlebar 15 relative to the front wheel 14 is lowered. That is, the handlebar 15 descends downward D in the up-down direction UD. As the handlebar 15, which is held by the rider R with the hand H, descends, a riding posture of the rider R who is holding the handlebar 15 in a leaning state changes, so that the position at which the rider R inputs a steering force to the handlebar 15 changes.

The vehicle following control device 22 starts a decelerating control on the leaning vehicle 1, and then makes the automatic transmission 17 perform a shift-down operation so as to reduce the amount of descent of the handlebar 15 caused by the operation of the front brake device 18.

The amount of decelerating of the leaning vehicle 1 corresponds to the sum of a braking force of the front wheel 14 and a braking force of the rear wheel 12. Here, the braking force of the front wheel 14 is a braking force caused by the front brake device 18. The braking force of the rear wheel 12 is the sum of a braking force caused by the rear brake device 19 and a rotation resistance torque of the output shaft 16a of the power source 16. The rotation resistance torque of the output shaft 16a of the power source 16 serves as an engine brake. The automatic transmission 17 is a device for changing the speed ratio of rotation of the rear wheel 12. The rotation resistance torque transmitted to the rear wheel 12 differs depending on the gear ratio in the automatic transmission 17. The shift-down operation by the automatic transmission 17 increases the rotation resistance torque of the output shaft 16a to be transmitted to the rear wheel 12.

The increase in the braking force of the rear wheel 12 caused by the shift-down operation allows the braking force of the front wheel 14 to decrease accordingly while maintaining the amount of decelerating of the leaning vehicle 1.

In this manner, the vehicle following control device 22 makes the automatic transmission 17 perform the shift-down operation so as to reduce the amount of descent of the handlebar 15 caused by the operation of the front brake device 18. The suppression of the amount of descent of the handlebar 15 results in suppression of an influence on the riding posture of the rider R who is holding the handlebar 15 in the leaning state.

The leaning vehicle 1 also includes a speed sensor 24 and a brake lamp 25. The speed sensor 24 detects the traveling speed of the leaning vehicle 1. The brake lamp 25 is turned on when at least one of the front brake device 18 or the rear brake device 19 is in operation.

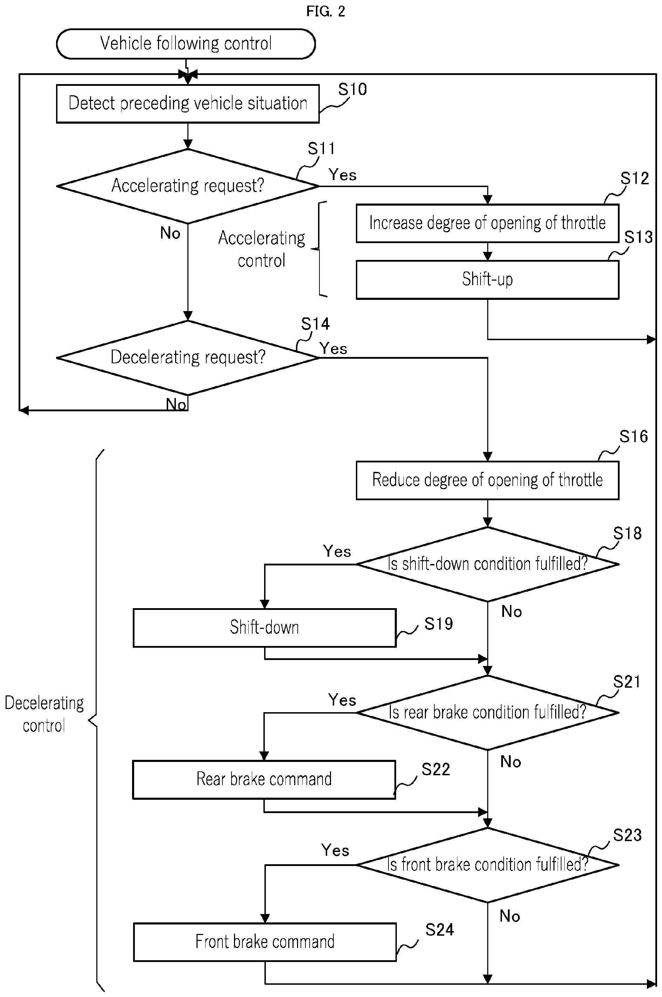

FIG. 2 is a flowchart illustrating operations of the vehicle following control device of the leaning vehicle shown in FIG. 1.

The vehicle following control device 22 performs a vehicle following control by executing a vehicle following control program stored in a memory (not shown).

In the vehicle following control, the vehicle following control device 22 detects a preceding vehicle situation (S10). More specifically, the vehicle following control device 22 acquires vehicle-to-vehicle information, which indicates the relationship between the leaning vehicle 1 and a preceding vehicle of the leaning vehicle 1. The vehicle-to-vehicle information includes, for example, the distance between the preceding vehicle and the leaning vehicle 1, the speed of the preceding vehicle, and the like. The speed of the preceding vehicle is a relative speed to the leaning vehicle 1, or the traveling speed of the preceding vehicle itself. For example, the vehicle following control device 22 acquires the speed of the preceding vehicle based on the distance to the preceding vehicle detected by a radar device (not shown) and a change over time in the distance. Based on the vehicle-to-vehicle information, the vehicle following control device 22 acquires a target acceleration of the leaning vehicle 1, which serves as a control target in accelerating or decelerating the leaning vehicle 1.

If the target acceleration indicates an accelerating request (S11: Yes), the vehicle following control device 22 performs an accelerating control (S12, S13). Here, a case in which the target acceleration indicates the accelerating request is, for example, a case in which the acquired target acceleration indicates accelerating in a moving direction of the leaning vehicle 1. The case in which the target acceleration indicates the accelerating request is, for example, a case in which the acquired target acceleration is a positive value. The vehicle following control device 22, in the accelerating control, increases the degree of opening of the throttle valve of the engine, which is the power source 16, for example (S12). The vehicle following control device 22 also increases the amount of fuel supply. As a result of the accelerating control, the leaning vehicle 1 accelerates. The vehicle following control device 22 makes the automatic transmission 17 perform the shift-up operation in accordance with the level of the target acceleration (S13).

If the target acceleration indicates a decelerating request (S14: Yes), the vehicle following control device 22 performs a decelerating control (S16 to S24). Here, a case in which the target acceleration indicates the decelerating request is a case in which the acquired target acceleration indicates decelerating in the moving direction of the leaning vehicle 1. The case in which the target acceleration indicates the decelerating request is, for example, a case in which the acquired target acceleration is a negative value. The vehicle following control device 22, in the decelerating control, reduces the degree of opening of the throttle valve (S16). As a result of the decelerating control, the leaning vehicle 1 decelerates.

If, in the decelerating control, a shift-down condition is fulfilled (S18: Yes), the vehicle following control device 22 makes the automatic transmission 17 perform the shift-down operation. In this manner, the vehicle following control device 22 starts the decelerating control, and then makes the automatic transmission 17 perform the shift-down operation (S19).

If a rear brake condition is fulfilled (S21: Yes), the vehicle following control device 22 outputs a rear brake command (S22). Accordingly, the vehicle following control device 22 makes the brake drive device 21 operate the rear brake device 19.

If a front brake condition is fulfilled (S23: Yes), the vehicle following control device 22 outputs a front brake command (S24). Accordingly, the vehicle following control device 22 makes the brake drive device 21 operate the front brake device 18.

Next, examples will be described, in which specific operation conditions are applied to the devices of the leaning vehicle 1 according to the embodiment.

### [First Example]

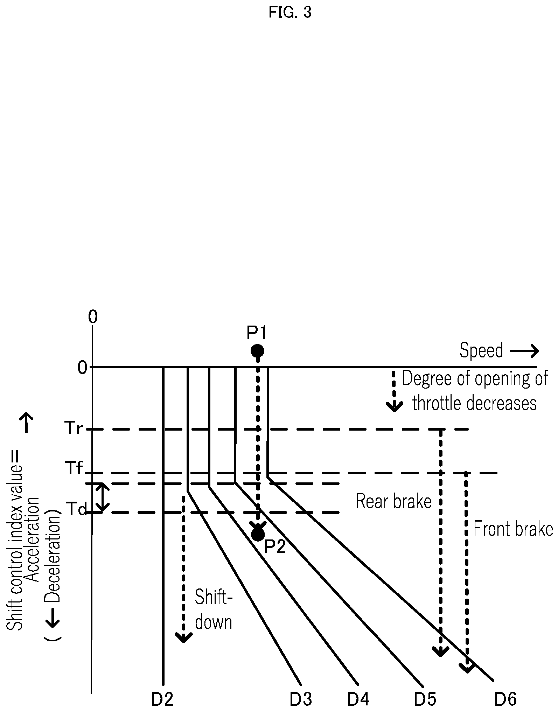

FIG. 3 is a graph schematically showing operation conditions of the devices in the first example.

In the graph shown in FIG. 3, the horizontal axis represents the traveling speed of the leaning vehicle 1 according to this example. The vertical axis represents a shift control index value. The shift control index value is one of indices of conditions for the shift-down.

The vehicle following control device 22 performs the shift-down operation based on the traveling speed and the shift control index value.

As the shift control index value in this example, the target acceleration is used, which is acquired by the vehicle following control device 22 based on the distance to the preceding vehicle. This is why the acceleration is indicated as the shift control index value on the vertical axis in the graph shown in FIG. 3. The acceleration in this example is an acceleration that the vehicle following control device 22 acquires based on the distance to the preceding vehicle.

The acceleration is a parameter also including the deceleration. For instance, a positive acceleration means accelerating, and a negative acceleration means decelerating. For clarity of a decelerating state, the acceleration is referred to as a deceleration if the acceleration value is negative as shown in FIG. 3. It should be noted that decelerating is the opposite to accelerating. Herein, as the acceleration is less than zero and its value is smaller, that is, as the acceleration has a negative value and its absolute value is larger, such a situation is expressed as "the acceleration is lower" or "the deceleration is higher."

The vehicle following control device 22 also operates the front brake device 18 and the rear brake device 19 in accordance with the acceleration. Thus, in the graph shown in FIG. 3, conditions of the operations of the automatic transmission 17, the front brake device 18, and the rear brake device 19, which operate based on the acceleration as the shift control index value, are presented together so that their mutual relationship is easy to understand.

In FIG. 3, D2 to D6 indicate gear shift reference lines for the second gear line D2 to the sixth gear line D6, respectively. When the traveling speed and the shift control index value are in a region between the second gear line D2 and the third gear line D3 in FIG. 3, the second gear is selected in the automatic transmission 17. When the traveling speed and the shift control index value are in a region between the third gear line D3 and the fourth gear line D4, the third gear is selected in the automatic transmission 17. When they are in a region between the fourth gear line D4 and the fifth gear line D5, the fourth gear is selected in the automatic transmission 17. When they are in a region between the fifth gear line D5 and the sixth gear line D6, the fifth gear is selected in the automatic transmission 17. When the traveling speed and the shift control index value are in a region to the upper right of the sixth gear line D6, the sixth gear is selected in the automatic transmission 17.

The third gear line D3 to sixth gear line D6 are each set such that: as long as the speed is under certain conditions, the acceleration does not change until reaching a gear shift area Td even though the acceleration decreases from zero (even though the deceleration increases from zero), then first shift-down is performed when the acceleration reaches the gear shift area Td, and further shift-down is performed as the acceleration further decreases. The gear shift area Td has a width. Here, the gear shift area Td is described as a lower limit value of the width that allows the shift-down to be performed with an enhanced reliability.

The acceleration (deceleration) has a small influence on the second gear line D2. That is, in this example, shift-down from the second gear to the first gear is not performed even if the acceleration decreases with a constant speed.

In the graph shown in FIG. 3, a reference acceleration Tr and a reference acceleration Tf are also illustrated. The reference acceleration Tr serves as a condition for the rear brake device 19 to operate. The reference acceleration Tf serves as a condition for the front brake device 18 to operate. In the graph shown in FIG. 3, the gear shift area Td of the automatic transmission 17 is located lower than the reference acceleration Tf of the front brake device 18. The gear shift area Td of the automatic transmission 17 is lower than the reference acceleration Tf of the front brake device 18. The gear shift area Td has a negative value, and its absolute value is larger than that of the reference acceleration Tf.

The reference acceleration Tf of the front brake device 18 is lower than the reference acceleration Tr of the rear brake device 19. Accordingly, the target acceleration, in the course of decreasing and dropping below zero along with a change from accelerating to decelerating of the leaning vehicle 1, falls below the reference acceleration Tr of the rear brake device 19, then falls below the reference acceleration Tf of the front brake device 18, and then falls below the gear shift area Td of the automatic transmission 17.

In this example, the acceleration falling below the gear shift area Td is applied to the shift-down condition (S18) in the flowchart shown in FIG. 2. The acceleration falling below the reference acceleration Tr of the rear brake device 19 is applied to a rear brake fulfillment condition (S21). The acceleration falling below the reference acceleration Tf of the front brake device 18 is applied to a front brake fulfillment condition (S23).

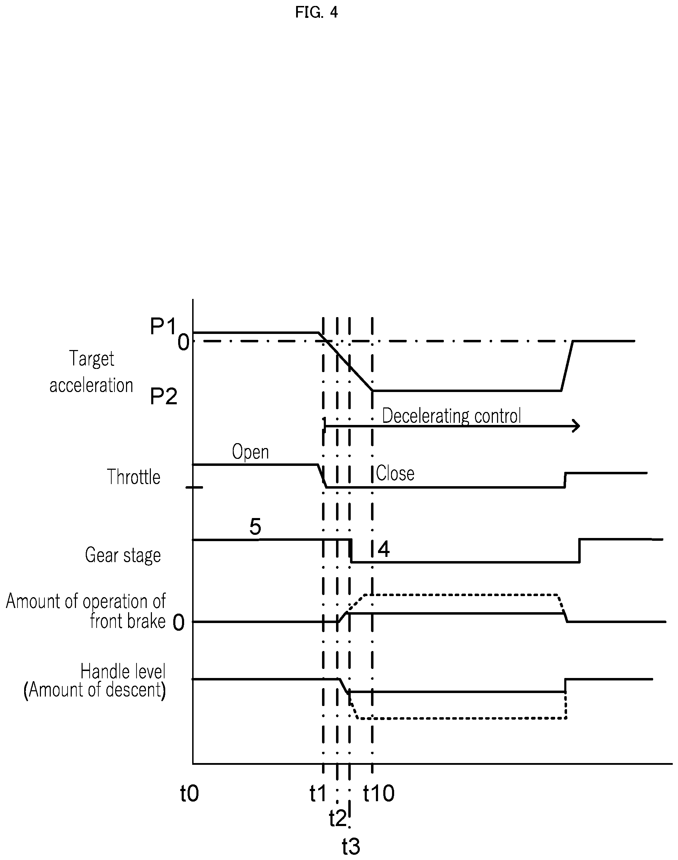

FIG. 4 is a time chart showing exemplary operations in an example.

FIG. 4 illustrates exemplary operations in a case where the conditions shown in FIG. 2 are applied.

With reference also to FIG. 1 to FIG. 3, a description will be given of exemplary operations in a case where the traveling speed of the leaning vehicle 1 and the target acceleration as the shift control index value are the values indicated by P1, and the target acceleration changes into P2 while the leaning vehicle 1 is accelerating.

At time t0, the target acceleration is P1. At this time, the throttle is open. In the automatic transmission 17, the fifth gear is selected.

At time t1, the target acceleration starts decreasing. The target acceleration falls below zero, and decreases down to P2. That is, the target acceleration indicates decelerating. From time t1 to time t10, the target acceleration gradually decreases. A reason therefore is that the target acceleration is in line with a change in the actual distance to the preceding vehicle. Another reason is that an abrupt change component of the target acceleration is eliminated by filtering in order to suppress sudden decelerating caused by a rapid change in the target acceleration.

As the target acceleration starts decreasing at time t1, the decelerating control (S16 to S24) is performed. First, the degree of opening of the throttle valve and the amount of fuel supply decrease. The degree of opening of the throttle valve becomes its minimum. As a result, the leaning vehicle 1, which has been in the accelerating state, is brought into the decelerating state.

If the target acceleration further decreases (i.e., the deceleration further increases) and falls below Tr (FIG. 3) (in FIG. 2, S21: Yes), the vehicle following control device 22 operates the rear brake device 19 (FIG. 2, S22).

If the target acceleration further decreases (i.e., the deceleration further increases) and falls below Tf (FIG. 3) at time t2 (FIG. 2, S23: Yes), the vehicle following control device 22 operates the front brake device 18 (FIG. 2, S24).

If the target acceleration further decreases (i.e., the deceleration further increases) and falls below the gear shift area Td (FIG. 3) at time t3 (FIG. 2, S18: Yes), the vehicle following control device 22 makes the automatic transmission 17 perform the shift-down operation (FIG. 2, S19). Consequently, the gear stage of the automatic transmission 17 is changed from the fifth gear to the fourth gear at time t3.

In the leaning vehicle 1 of this example, as described above, while the target acceleration is decreasing from P1 to P2, the degree of opening of the throttle valve decreases, then the rear brake device 19 operates, then the front brake device 18 operates, and the shift-down operation by the automatic transmission 17 takes place. In this example, the shift-down operation by the automatic transmission 17 is performed when the front brake device 18 is in operation. The vehicle following control device 22 starts the decelerating control on the leaning vehicle 1 at time t1, and then makes the automatic transmission 17 perform the shift-down operation so as to reduce the amount of descent of the handlebar 15 caused by the operation of the front brake device 18.

The actual acceleration (amount of decelerating) of the leaning vehicle 1 corresponds to the sum of the braking force of the front wheel 14 and the braking force of the rear wheel 12. Here, the braking force of the front wheel 14 is a braking force exerted by the front brake device 18. The braking force of the rear wheel 12 is the sum of a braking force exerted by the rear brake device 19 and a rotation resistance torque of the output shaft 16a of the power source 16. The rotation resistance torque to be transmitted to the rear wheel 12 differs depending on the gear ratio in the automatic transmission 17. As a result of the shift-down operation from the fifth gear to the fourth gear of the automatic transmission 17 at time t3, the rotation resistance torque of the output shaft 16a to be transmitted to the rear wheel 12 increases.

The increase in the braking force of the rear wheel 12 caused by the shift-down operation allows the braking force of the front wheel 14 to decrease accordingly. That is, the front brake operation amount is reduced as compared to when the shift-down operation does not take place (as indicated by the dotted line in the front brake operation amount in FIG. 4), while the amount of decelerating in the leaning vehicle 1 is maintained. As a result of the reduction in the front brake operation amount, the amount of descent of the handlebar 15 is also reduced as compared to when the shift-down operation does not take place (as indicated by the dotted line in the handle level in FIG. 4).

Since the amount of descent of the handlebar 15 is suppressed in this manner, an influence on the riding posture of the rider R who is holding the handlebar 15 in the leaning state is suppressed.

### [Second Example]

The second example will now be described.

This example is different from the first example described above in that instead of the target acceleration, an actual acceleration, which is a real acceleration of the leaning vehicle 1, is adopted as the shift control index value. Except for this point, this example is identical to first example described above.

The vehicle following control device 22, for example, like in the first example, acquires a target acceleration based on the distance to the preceding vehicle, and controls the power source 16 and the brake drive device 21 based on the target acceleration. The vehicle following control device 22 also acquires an actual acceleration of the leaning vehicle 1 by using the speed detected by the speed sensor 24 disposed in the leaning vehicle 1, for example. The vehicle following control device 22 controls the automatic transmission 17 based on the actual acceleration.

In this example, the actual acceleration is used to make a determination about the fulfillment of the shift-down condition (S18) in the flowchart shown in FIG. 2. For example, if the actual acceleration decreases and falls below the gear shift area Td (FIG. 3) (FIG. 2, S18: Yes), the vehicle following control device 22 makes the shift-down operation performed (FIG. 2, S19).

In this example, the amount of operation of the front brake device 18 decreases along with the shift-down operation performed based on the actual acceleration of the leaning vehicle 1. Accordingly, as a result of the increase in the braking force of the rear wheel 12 and the decrease in the braking force of the front wheel 14, the amount of descent of the handlebar 15 is suppressed. Consequently, an influence on the riding posture of the rider R is suppressed.

### [Third Example]

The third example will now be described.

This example is different from the first example described above in that instead of the target acceleration, an operation state of the front brake device 18 is adopted as the shift control index value. Except for this point, this example is identical to the first example described above.

The vehicle following control device 22, for example, like in the first example, acquires a target acceleration based on the distance to the preceding vehicle, and controls the power source 16 and the brake drive device 21 based on the target acceleration. The vehicle following control device 22 of this example forcibly makes the automatic transmission 17 perform the shift-down operation when the front brake device 18 is in operation.

In this example, the operation state of the front brake device 18 is used to make a determination about the fulfillment of the shift-down condition (S18) in the flowchart shown in FIG. 2.

For example, if the acceleration decreases and falls below the reference acceleration Tf (FIG. 3) of the front brake device 18, the vehicle following control device 22 operates the front brake device 18. Then, if the front brake device 18 is in operation (S18: Yes), the vehicle following control device 22 makes the shift-down operation performed (FIG. 2, S19).

Here, the vehicle following control device 22 can consider that a state in which the vehicle following control device 22 itself performs the control for operating the front brake device 18 is the operation of the front brake device 18. The vehicle following control device 22 is not particularly limited, however, and the vehicle following control device 22 may determine whether the front brake device 18 is in operation based on a result of detection by a sensor disposed in the front brake device 18 or in the brake drive device 21, for example.

### [Fourth Example]

The fourth example will now be described.

This example is different from the first example described above in that instead of the target acceleration, the amount of operation of the front brake device 18 is adopted as the shift control index value. Except for this point, this example is identical to the first example described above.

The vehicle following control device 22, for example, like in the first example, acquires a target acceleration based on the distance to the preceding vehicle, and controls the power source 16 and the brake drive device 21 based on the target acceleration.

The vehicle following control device 22 of this example makes the automatic transmission 17 perform the shift-down operation based on the amount of operation of the front brake device 18.

In this example, the amount of operation of the front brake device 18 is used to make a determination about the fulfillment of the shift-down condition (S18) in the flowchart shown in FIG. 2.

The amount of operation of the front brake device 18 is, for example, the pressure of a brake caliper disposed in the front brake device 18. A result of detection by a sensor configured to detect the pressure of the brake caliper is used as the amount of operation of the front brake device 18. Here, how to acquire the amount of operation is not particularly limited, and for example, the pressure of the working fluid that the brake drive device 21 supplies to the front brake device 18 may be adoptable. A result of detection by a pressure sensor configured to detect the pressure of the working fluid is used as the amount of operation of the front brake device 18.

For example, if the amount of operation of the front brake device 18 exceeds a first reference, the vehicle following control device 22 makes the shift-down operation perform. If the amount of operation exceeds a second reference, the vehicle following control device 22 makes the shift-down operation further perform.

The determination with use of the amount of operation is not limited to the above-described one.

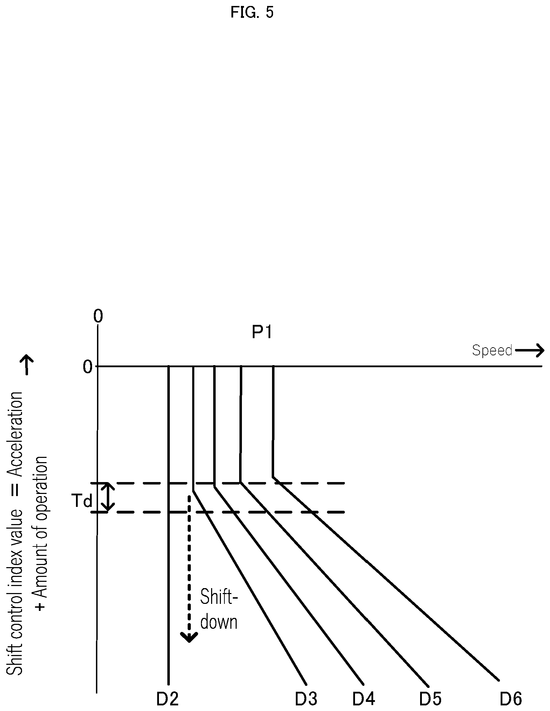

FIG. 5 is a graph showing characteristics of gear stages in a variation of the fourth example.

In the graph, the vertical axis represents, as the shift control index value, the sum of the acceleration of the leaning vehicle 1 and the amount of operation of the front brake device 18. Adopted as the amount of operation is an amount obtained by converting the acceleration indicative of decelerating into a negative value. Setting is made such that if the shift control index value, which is the sum of the acceleration and the amount of operation obtained as a result of conversion into the negative value, reaches the gear shift area Td, initial shift-down is performed, and further shift-down is performed as the shift control index value further decreases.

In this manner, in the variation, the shift-down is performed in accordance with both the acceleration and the amount of operation.

Along with the shift-down operation performed based on the amount of operation of the front brake device 18, the amount of operation of the front brake device 18 decreases. Accordingly, as a result of the increase in the braking force of the rear wheel 12 and the decrease in the braking force of the front wheel 14, the amount of descent of the handlebar 15 is suppressed. Consequently, an influence on the riding posture of the rider R is suppressed.

### [Fifth Example]

The fifth example will now be described.

This example is different from the fourth example described above in that instead of the amount of operation of the front brake device 18, a front brake control value, which is a control value for the front brake device 18, is adopted. Except for this point, this example is identical to the fourth example described above. The front brake control value is a control value that is acquired in accordance with the acceleration and the speed by the vehicle following control device 22, and is a control value with which the vehicle following control device 22 operates the front brake device 18, for example.

In this example, the shift-down operation is performed based on the front brake control value, and thus the shift-down operation is performed so as to reduce the amount of descent of the handlebar 15 without detection of an actual operation state of the front brake. Accordingly, the amount of descent of the handlebar 15 is able to be suppressed with a small number of component parts.

### [Sixth Example]

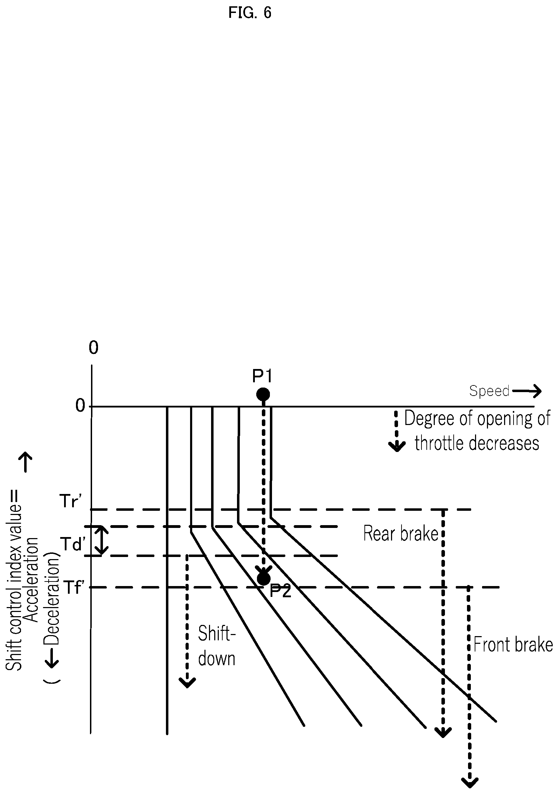

FIG. 6 is a graph schematically showing operation conditions of devices in the sixth example.

In the graph shown in FIG. 6, the reference acceleration Tf' of the front brake device 18 is located lower than the gear shift area Td' of the automatic transmission 17. That is, the reference acceleration Tf' of the front brake device 18 is lower than the gear shift area Td' of the automatic transmission 17. The gear shift area Td' is a negative value, and its absolute value is smaller than that of the reference acceleration Tf'. Except for this point, this example is identical to the first example described above.

The reference acceleration Tf' of the front brake device 18 is lower than the reference acceleration Tr' of the rear brake device 19. The reference acceleration Tr' of the rear brake device 19 is higher than the gear shift area Td' of the automatic transmission 17. The reference acceleration Tf' is an expected operating range where the operation of the front brake device 18 is expected to take place.

Accordingly, the target acceleration, in the course of decreasing and dropping below zero along with a change from accelerating to decelerating of the leaning vehicle 1, falls below the reference acceleration Tr' of the rear brake device 19, then falls below the gear shift area Td' of the automatic transmission 17, and then falls below the reference acceleration Tf' of the front brake device 18.

In the leaning vehicle 1, for example, while the target acceleration is decreasing from P1 to P2, the degree of opening of the throttle valve decreases, then the rear brake device 19 operates, then the shift-down operation by the automatic transmission 17 takes place, and then the front brake device 18 operates. In the leaning vehicle 1 of this example, the shift-down operation takes place before the front brake device 18 operates.

In the leaning vehicle 1 of this example, as described above, when the target acceleration is in the expected operating range where the operation of the front brake device 18 is expected to take place, the automatic transmission 17 is caused to perform the shift-down operation so as to reduce the amount of descent of the handlebar 15 caused by the operation of the front brake device 18.

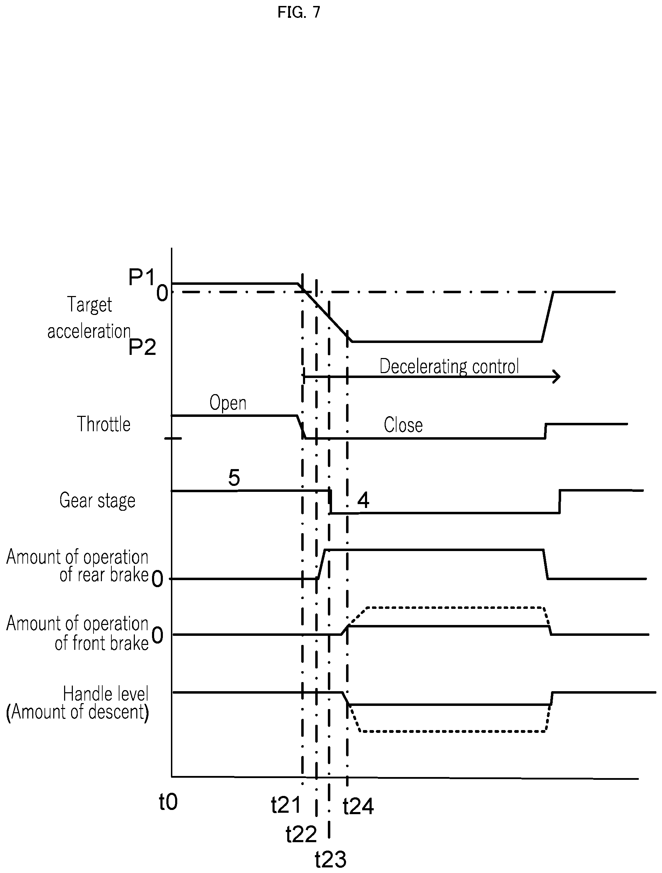

FIG. 7 is a time chart showing exemplary operations in the sixth example.

At time t21, the target acceleration starts decreasing. The target acceleration falls below zero, and decreases down to P2. The target acceleration gradually decreases from time t21 to time t24.

As the target acceleration starts decreasing at time t21, the decelerating control (FIG. 2, S16 to S24) is performed. First, the degree of opening of the throttle valve becomes its minimum. As a result, the leaning vehicle 1, which has been in the accelerating state, is brought into the decelerating state.

If the target acceleration further decreases and falls below Tr' (FIG. 6) at time t22 (FIG. 2, S21: Yes), the vehicle following control device 22 operates the rear brake device 19 (FIG. 2, S22).

The gear shift area Td' of this example is set such that a target acceleration included therein is covered by the expected operating range where the operation of the front brake device 18 is expected to take place. If the target acceleration further decreases and falls below the gear shift area Td' (FIG. 6) at time t23 (FIG. 2, S18: Yes), the vehicle following control device 22 makes the shift-down operation performed (FIG. 2, S19). Consequently, the gear stage of the automatic transmission 17 is changed from the fifth gear to the fourth gear at time t23.

If the target acceleration further decreases (i.e., the deceleration further increases) and falls below Tf' (FIG. 6) at time t24 (FIG. 2, S23: Yes), the vehicle following control device 22 makes the front brake device 18 operated (FIG. 2, S24).

In the leaning vehicle 1 of this example, as described above, while the target acceleration is decreasing from P1 to P2, the degree of opening of the throttle valve decreases, then the rear brake device 19 operates, then the shift-down operation by the automatic transmission 17 is performed, and then the front brake device 18 operates.

The shift-down operation by the automatic transmission 17 is performed when the target acceleration is in the gear shift area Td', which is covered by the expected operating range where the operation of the front brake device 18 is expected to take place.

In this manner, after the decelerating control on the leaning vehicle 1 is started at time t21 and before the operation of the front brake device 18 takes place, the vehicle following control device 22 makes the automatic transmission 17 perform the shift-down operation so as to reduce the amount of descent of the handlebar 15 caused by the operation of the front brake device 18.

In this example, the shift-down operation is performed when the front brake device 18 is not in operation and the target acceleration is in the expected operating range where the operation of the front brake device 18 is expected to take place. Since the shift-down operation is performed before the front brake device 18 actually operates, the amount of descent of the handlebar 15 at a time of operating the front brake device 18 is suppressed. Consequently, an influence on the riding posture of the rider R is suppressed.

### [Seventh Example]

The seventh example will now be described.

This example is different from sixth example described above in that instead of the target acceleration, an operation state of the rear brake device 19 is adopted as the shift control index value. Except for this point, this example is identical to the sixth example described above.

The vehicle following control device 22, for example, like in sixth example, acquires a target acceleration based on the distance to the preceding vehicle, and controls the power source 16 and the brake drive device 21 based on the target acceleration. The vehicle following control device 22 of this example forcibly makes the automatic transmission 17 perform the shift-down operation when the rear brake device 19 is in operation.

In this example, the operation state of the rear brake device 19 is used to make a determination about the fulfillment of the shift-down condition (S18) in the flowchart shown in FIG. 2.

For example, if the acceleration decreases and falls below the reference acceleration Tr' (FIG. 6) of the rear brake device 19, the vehicle following control device 22 operates the rear brake device 19. Then, if the rear brake device 19 is in operation (S18: Yes), the vehicle following control device 22 makes the shift-down operation perform (FIG. 2, S19).

Here, the vehicle following control device 22 can consider that a situation in which the vehicle following control device 22 itself performs the control for operating the rear brake device 19 is the operation of the rear brake device 19. The vehicle following control device 22 is not particularly limited, however, and the vehicle following control device 22 may determine whether the rear brake device 19 is in operation based on a result of detection by a sensor disposed in the rear brake device 19 or in the brake drive device 21, for example.

Since the shift-down operation is performed when the rear brake device 19 is in operation, the shift-down operation is performed before the front brake device 18 operates.

### [Eighth Example]

The eighth example will now be described.

This example is different from the seventh example described above in that instead of the target acceleration, a turn-on state of the brake lamp 25 is adopted as the shift control index value. Except for this point, this example is identical to the seventh example described above.

The vehicle following control device 22, for example, like in the seventh example, acquires a target acceleration based on the distance to the preceding vehicle, and controls the power source 16 and the brake drive device 21 based on the target acceleration. The vehicle following control device 22 of this example forcibly makes the automatic transmission 17 perform the shift-down operation when the brake lamp 25 is on.

In this example, the turn-on state of the brake lamp 25 is used to make a determination about the fulfillment of the shift-down condition (S18) in the flowchart shown in FIG. 2.

For example, if the acceleration decreases and falls below the reference acceleration Tr' (FIG. 6) of the rear brake device 19, the vehicle following control device 22 operates the rear brake device 19. Together with the operation of the rear brake device 19, the brake lamp 25 is turned on. The brake lamp 25 is, for example, turned on under control by the vehicle following control device 22.

If the brake lamp 25 is on (S18: Yes), the vehicle following control device 22 makes the shift-down operation perform (FIG. 2, S19).

Here, the vehicle following control device 22 can consider that a situation in which the vehicle following control device 22 itself performs the control for turning the brake lamp 25 on is the turn-on of the brake lamp 25. The vehicle following control device 22 is not particularly limited, however. For example, in a case where a sensor disposed in the brake drive device 21 detects the operation of the front brake device 18 or the rear brake device 19, the vehicle following control device 22 may make a determination about the turn-on based on a result of detection by the sensor.

Since the shift-down operation is performed when the brake lamp 25 is on, the shift-down operation is performed before the front brake device 18 is operated.

### [Ninth Example]

The ninth example will now be described.

This example is different from the sixth example described above in that instead of the target acceleration, a rear brake control value for controlling the rear brake device 19 is adopted as the shift control index value. Except for this point, this example is identical to the sixth example described above.

The vehicle following control device 22 of this example makes the automatic transmission 17 perform the shift-down operation based on the rear brake control value.

In this example, the rear brake control value is used to make a determination about the fulfillment of the shift-down condition (S18) in the flowchart shown in FIG. 2.

For example, if the rear brake control value exceeds a first reference, the vehicle following control device 22 makes the shift-down operation perform. If the rear brake control value exceeds a second reference, the vehicle following control device 22 makes the shift-down operation further perform.

The determination with use of the amount of operation is not limited to the above-described one.

An variation of this example will be described by applying FIG. 5. In this variation, the vertical axis of the graph shown in FIG. 5 represents, as the shift control index value, the sum of the acceleration of the leaning vehicle 1 and the amount of operation of the rear brake device 19. Adopted as the amount of operation is an amount obtained by converting the acceleration indicative of decelerating into a negative value. Setting is made such that if the shift control index value, which is the sum of the acceleration and the amount of operation obtained as a result of conversion into the negative value, reaches the gear shift area Td, initial shift-down is performed, and further shift-down is performed as the shift control index value further decreases.

In this manner, in this variation, the shift-down is performed in accordance with both the acceleration and the amount of operation.

### [Tenth Example]

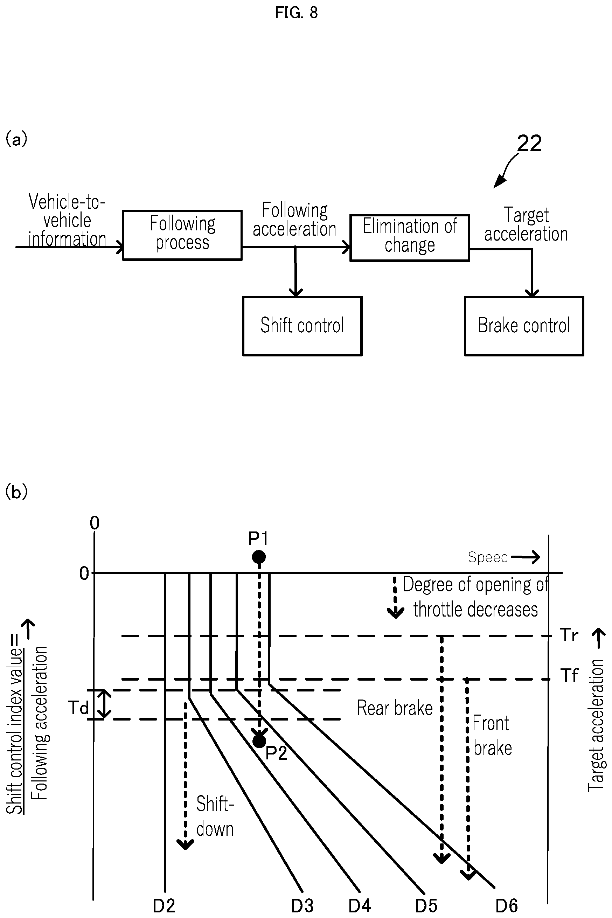

FIG. 8 is a graph schematically showing operation conditions of devices in the tenth example. In FIG. 8, the part (a) is a chart showing a process and a flow of data in the vehicle following control device. The part (b) is a chart schematically showing exemplary operation conditions of devices.

The vehicle following control device 22 of this example acquires a following acceleration, which is used to follow the preceding vehicle, from the relationship with the preceding vehicle, and also acquires a target acceleration, which is obtained by eliminating an abrupt change component from the following acceleration, to control accelerating or decelerating of the leaning vehicle 1 based on the target acceleration. In more detail, as shown in the part (a) of FIG. 8, the vehicle following control device 22 acquires the following acceleration by performing a following process with vehicle-to-vehicle information, which indicates the distance to the preceding vehicle. The vehicle following control device 22 also acquires the target acceleration by eliminating an abrupt change-over-time component from the following acceleration.

The elimination of the abrupt change-over-time component is a process for acquiring the target acceleration by limiting the amount of change per unit time in the basic following acceleration, for example. The elimination of the abrupt change-over-time component is not particularly limited, and for example, a process is adoptable in which following accelerations that are acquired one after another as time elapses undergo filtering, such as integration processing, so that the target acceleration is acquired.

The vehicle following control device 22 controls the power source 16 and the brake drive device 21 based on the target acceleration, to control accelerating or decelerating of the leaning vehicle 1. On the other hand, the vehicle following control device 22 makes the automatic transmission 17 perform the shift-down operation based on not the target acceleration but the following acceleration.

As shown in the part (b) of FIG. 8, the power source 16, the front brake device 18, and the rear brake device 19 are controlled in accordance with the target acceleration, which is indicated at the right side of the graph. The shift-down is controlled in accordance with the following acceleration, which is indicated at the left side of the graph. Both the target acceleration and the following acceleration indicate an acceleration, and their scales on the graph are equal. Here, it should be noted that the following acceleration, unlike the target acceleration, contains the abrupt change component.

In this example, accelerating or decelerating of the leaning vehicle 1 is controlled based on the target acceleration in which the abrupt change component is eliminated.

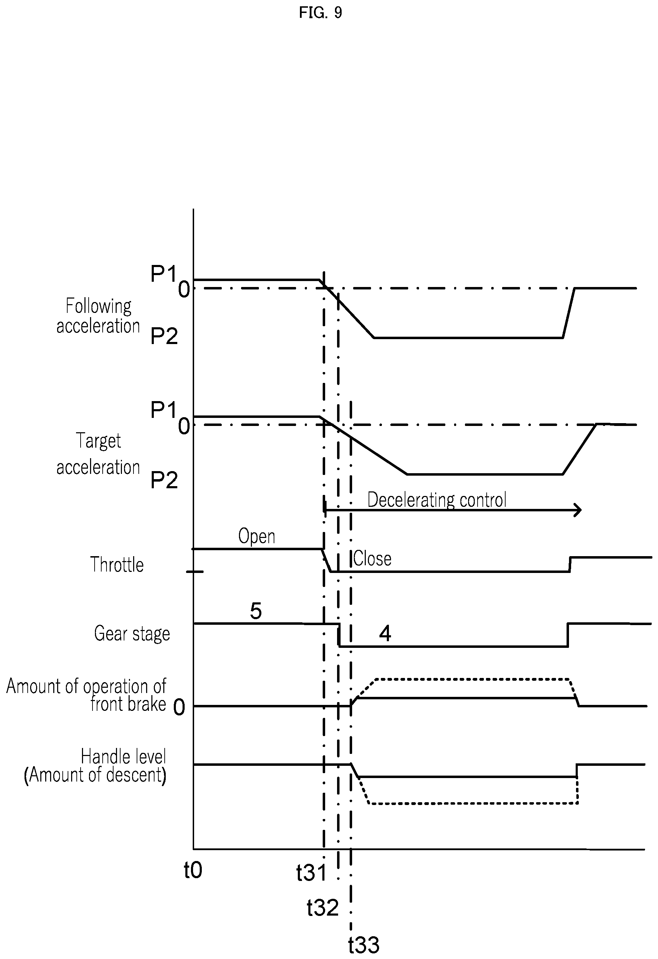

FIG. 9 is a time chart showing exemplary operations in the tenth example.

In the chart of FIG. 9, both the following acceleration and the target acceleration are indicated.

The following acceleration, as an acceleration for following the preceding vehicle, is acquired from the relationship with the preceding vehicle. The target acceleration is acquired such that it follows the value of the following acceleration with the amount of change per unit time being limited. The target acceleration is a result of elimination of the abrupt change-over-time component from the following acceleration. The following acceleration changes from P1 to P2, and the target acceleration also changes from P1 to P2. The change in the target acceleration is more gradual.

When, after the decelerating control is started at time t31, the following acceleration falls below the gear shift area Td at time t32, the automatic transmission 17 performs the shift-down operation. If the target acceleration falls below the reference acceleration Tf at time t33, the front brake device 18 operates.

In this example, accelerating or decelerating of the leaning vehicle 1 is controlled based on the target acceleration obtained by elimination of the abrupt change component. This suppresses an abrupt behavior, which may be caused by the operation of the front brake device 18, after the start of the decelerating control. The use of the following acceleration for the determination about the shift-down operation allows the amount of descent of the handlebar 15 to be suppressed earlier in response to the operation of the front brake device 18. Consequently, an influence on the riding posture of the rider R is suppressed earlier.

### Reference Signs List

- 1 :: leaning vehicle
- 11 :: vehicle body
- 12 :: rear wheel
- 13 :: front fork
- 14 :: front wheel
- 15 :: handlebar
- 16 :: power source
- 16a :: output shaft
- 17 :: automatic transmission
- 18 :: front brake device
- 19 :: rear brake device
- 21 :: brake drive device
- 22 :: vehicle following control device
- 23 :: shock absorber
- CA :: caster angle

## Claims

1. A leaning vehicle (1) configured to lean in vehicle left direction when turning left and lean in vehicle right direction when turning right, the leaning vehicle (1) comprising:
a vehicle body (11);
a rear wheel (12) as a driving wheel supported by the vehicle body (11);
a front fork (13) rotatably supported by the vehicle body (11) so as to have a caster angle relative to up-down direction of the vehicle body (11), the front fork (13) being provided with a shock absorber (23), the shock absorber (23) being configured to expand and contract in its rotation axis direction;
a front wheel (14) supported by the front fork (13);
a handlebar (15) fixed to the front fork (13), the handlebar (15) being configured to be held by a rider of the leaning vehicle (1);
a power source (16) having an output shaft (16a), the power source (16) being configured to output power for making the leaning vehicle (1) travel in the form of rotation of the output shaft (16a);
an automatic transmission (17) for, through a shift-up operation or a shift-down operation, changing the speed ratio between rotation outputted from the output shaft (16a) and rotation of the rear wheel (12);
a front brake device (18) for braking the front wheel (14);
a rear brake device (19) for braking the rear wheel (12);
a brake drive device (21) for operating the front brake device (18) and the rear brake device (19); and
a vehicle following control device (22) for controlling the power source (16), the brake drive device (21), and the automatic transmission (17), to control accelerating or decelerating of the leaning vehicle (1) such that the leaning vehicle (1) follows a preceding vehicle of the leaning vehicle (1),
the vehicle following control device (22) being configured to, after starting a decelerating control on the leaning vehicle (1), make the automatic transmission (17) perform a shift-down operation so as to reduce the amount of descent of the handlebar (15) caused by the operation of the front brake device (18).

2. The leaning vehicle (1) according to claim 1, wherein
the vehicle following control device (22) is configured to start a decelerating control on the leaning vehicle (1), and then, when the front brake device (18) is in operation, make the automatic transmission (17) perform a shift-down operation so as to reduce the amount of descent of the handlebar (15) caused by the operation of the front brake device (18).

3. The leaning vehicle (1) according to claim 2, wherein
the vehicle following control device (22) is configured to make the automatic transmission (17) perform a shift-down operation so as to reduce the amount of descent of the handlebar (15) caused by the operation of the front brake device (18), based on the amount of operation of the front brake device (18).

4. The leaning vehicle (1) according to claim 2 or 3, wherein
the vehicle following control device (22) is configured to acquire a target acceleration, to control accelerating or decelerating of the leaning vehicle (1) based on the target acceleration, and to make the automatic transmission (17) perform a shift-down operation so as to reduce the amount of descent of the handlebar (15) caused by the operation of the front brake device (18) based on the target acceleration.

5. The leaning vehicle (1) according to any one of claims 2 to 4, wherein
the vehicle following control device (22) is configured to detect an actual acceleration of the leaning vehicle (1), to control accelerating or decelerating of the leaning vehicle (1) based on the actual acceleration, and to make the automatic transmission (17) perform a shift-down operation so as to reduce the amount of descent of the handlebar (15) caused by the operation of the front brake device (18) based on the actual acceleration.

6. The leaning vehicle (1) according to any one of claims 2 to 5, wherein
the vehicle following control device (22) is configured to acquire a front brake control value, which is used to make the brake drive device (21) operate the front brake device (18), to control accelerating or decelerating of the leaning vehicle (1) based on the front brake control value, and to make the automatic transmission (17) perform a shift-down operation so as to reduce the amount of descent of the handlebar (15) caused by the operation of the front brake device (18) based on the front brake control value.

7. The leaning vehicle (1) according to claim 1, wherein
the vehicle following control device (22) is configured to acquire a target acceleration as a control target in accelerating or decelerating the leaning vehicle (1), and when the target acceleration is in an expected operating range where the operation of the front brake device (18) is expected to take place, make the automatic transmission (17) perform a shift-down operation so as to reduce the amount of descent of the handlebar (15) caused by the operation of the front brake device (18).

8. The leaning vehicle (1) according to claim 7, wherein
the vehicle following control device (22) is configured to start a decelerating control on the leaning vehicle (1), and then, when the rear brake device (19) is in operation, force the automatic transmission (17) to perform a shift-down operation so as to reduce the amount of descent of the handlebar (15) caused by the operation of the front brake device (18).

9. The leaning vehicle (1) according to claim 8, wherein
the vehicle following control device (22) is configured to start a decelerating control on the leaning vehicle (1), and then based on the amount of operation of the rear brake device (19), make the automatic transmission (17) perform a shift-down operation so as to reduce the amount of descent of the handlebar (15) caused by the operation of the front brake device (18).

10. The leaning vehicle (1) according to claim 8 or 9, further comprising
a brake lamp configured to be turned on when the brake drive device (21) operates the front brake device (18) or the rear brake device (19), wherein
when the brake lamp is on, the vehicle following control device (22) is configured to make the automatic transmission (17) perform a shift-down operation so as to reduce the amount of descent of the handlebar (15) caused by the operation of the front brake device (18).

11. The leaning vehicle (1) according to any one of claims 8 to 10, wherein
the vehicle following control device (22) is configured to acquire a rear brake control value, which is used to make the brake drive device (21) operate the rear brake device (19), to control accelerating or decelerating of the leaning vehicle (1) based on the rear brake control value, and to make the automatic transmission (17) perform a shift-down operation so as to reduce the amount of descent of the handlebar (15) caused by the operation of the front brake device (18) based on the rear brake control value.

12. The leaning vehicle (1) according to any one of claims 8 to 11, wherein
the vehicle following control device (22) is configured to acquire a following acceleration, which is used to follow the preceding vehicle, from the relationship with the preceding vehicle, and to acquire a target acceleration, which is obtained by eliminating an abrupt change component from the following acceleration, to control accelerating or decelerating of the leaning vehicle (1) based on the target acceleration, and to make the automatic transmission (17) perform a shift-down operation so as to reduce the amount of descent of the handlebar (15) caused by the operation of the front brake device (18) based on the following acceleration.
